# EUROPEAN PATENT APPLICATION

(11) **EP 2 397 451 A2**
(43) Date of publication of application: **21.12.2011**
(21) Application number: 11170607.3
(22) Date of filing: 20.06.2011
(51) Int. Cl.: C04B 14/10, C04B 18/02

(54) **Clay-containing compositions**

(30) Priority: 21.06.2010 GB 1010368
(71) Applicant: Lafarge SA, 75116 Paris (FR)
(72) Inventor: Gossling, Robert, Duffield Derby DE45 4FW (GB); Wheeldon, Peter, Acklam Middlesborough TS5 7NF (GB)
(74) Representative: Caldwell, Judith Margaret

(57) **Abstract**

The invention provides a composition comprising fines from the calcination of dolomite and a clay-containing material.

## Description

This invention relates to compositions comprising clay and a by-product from the calcination of dolomite.

Dolomite is a sedimentary carbonate rock comprising mainly the mineral dolomite [CaMg(CO₃)₂]. Rocks comprising 10 to 50% of dolomite are called dolomitic. Most dolomite has been formed by a geological dolomitisation process in which calcium in limestone [Ca(CO₃)₂] is partially replaced by magnesium.

Dolomite is calcined to produce calcium magnesium oxide (CaMg0) for use in the manufacture of steel, refractories and glass. Carbon dioxide is released from the dolomite13 during the calcination process. The calcination process is carried out in kilns. The process produces as a by-product a fine particulate material which is collected, for example by electrostatic precipitation, e.g. by precipitation onto charged electrodes.

The material collected which is a precipitated kiln dust, in this specification including the accompanying claims, is called "fines from the calcination of dolomite" or "fines". A limited amount has been used for blending with limestone, for sale as an agricultural lime product. The remainder has heretofore presented a problem of disposal or storage.

The term "clay" can refer to two types of material: the first is a group of minerals comprising four main mineral groups: kaolinites; montmorillonite/smectites; illites; and chlorites; the second is a material whose particle sizes are less than about 4µm regardless of the minerals present in the particles. The term "clay" as used in this specification including the accompanying claims is to be understood to embrace both types of materials

Clay minerals are hydrous aluminium silicates which generally comprise two structural units. The units associate in layers. A sheet of silicon-oxygen tetrahedra is associated with an octahedral sheet comprising aluminium or magnesium in six-fold coordination with oxygen. Tetrahedral and octahedral sheets together form a layer. Cations may be present between the layers. The cations include alkali metals, for example potassium or sodium, alkaline earth metals, for example calcium or magnesium, and other metals such as iron.

Clay occurs as a contaminant in various materials, for example in quarried aggregate and in excavated materials where its presence may be undesirable. The removal of the clay may be difficult or may give rise to waste products which require long term storage. For example:
(i) Clay may be removed from quarried aggregate by washing but the resulting aqueous suspension may be difficult to filter in order to obtain a reasonably dry filtered product which can be handled mechanically. When filtration is difficult the filter cake produced may still contain a substantial proportion of water, for example up to 50%. Such filter cake requires long-term storage as a waste product.
(ii) Physical removal of clay from quarried aggregates by screening may not be practicable, particularly in wet conditions.
(iii) When clay is present in excavated materials, for example in trench arisings when trenches are dug to provide access to underground utilities, its presence can render it difficult or impossible to reuse the excavated materials to refill the excavation. The clay may make satisfactory compaction of material in the refilled hole difficult or impossible.

The use of lime, as quicklime (CaO) or slaked lime (Ca(OH)₂), in the treatment of soil to stabilise it or produce a hydraulically bound mixture has been described. Lime requires care in handling because of its alkalinity and, in the case of quicklime, its ability to react with water in a highly exothermic reaction. In addition both materials may allow an alkaline aqueous leachate to contaminate adjacent areas leading to a risk of damage to vegetation such as trees.

It has now been discovered that fines from the calcination of dolomite, which have a pH of 10 to 11 which is lower than slaked lime (pH 12.4), can be used in the treatment of clay-containing materials to improve their mechanical properties, for example to facilitate separation of the clay or to initiate a cementitious reaction and produce a hydraulically bound material (HBM). The addition of fines from the calcination of dolomite to a clay-containing material provides a composition which has improved physicochemical properties when compared with the clay-containing material itself. The present invention seeks to provide compositions comprising clay-containing materials which compositions have improved properties: for example, compositions enabling waste material from the production of aggregate, which material comprises silt and clay, to be pelletised after contact with the fines from the calcination of dolomite; compositions which facilitate removal of clay from clay-containing aggregate material by screening after contact with the fines from the calcination of dolomite; and compositions comprising arisings from, for example, excavation trenches through roads, and also comprising fines from the calcination of dolomite, to enable the arisings to be reinstated as a hydraulically bound material (HBM).

The present invention accordingly provides a composition comprising a clay-containing material and fines which fines are from the calcination of dolomite.

The fines are generally a complex mixture which comprises, for example,
calcium magnesium carbonate (CaMg(CO₃)₂, dolomite);
calcium magnesium oxide (CaO•MgO);
calcium oxide (CaO); and/or
magnesium oxide (MgO).

Calcium carbonate (calcite) and/or calcium sulphate (anhydrite) may also be present.

The fines may comprise, for example,
60% or more, preferably 40% or more, of calcium magnesium carbonate;
15 to 60%, for example 15 to 40%, of calcium magnesium oxide;
15 to 40% of calcium oxide; and/or
15 to 40% of magnesium oxide; other compounds may also be present in smaller amounts.

According to a feature of the invention fines from the calcination of dolomite may comprise the following compounds in the amounts given in parenthesis: calcium magnesium carbonate (for example 15 to 45%); calcium carbonate (for example 15 to 30%); magnesium oxide (for example 15 to 20%); calcium oxide (for example 5 to 15%); and/or calcium sulphate (for example about 10%). The compounds, when present, are generally in the form of, respectively, dolomite, calcite, periclase, lime and anhydrite.

The fines preferably comprise: Mg0 20 to 45% (for example 25 to 40%); Ca0 30 to 60% (for example 45 to 60%); Fe₂0₃ 0.5 to 7%, for example 0.5 to 4.0%; and/or S 1 to 6%; other elements may also be present in smaller amounts.

After collection from the kiln the fines used in the compositions of the invention are preferably protected from water, for example by bagging or tankering. Such protection serves, for example, to reduce possible hydrolysis of calcium and magnesium oxides (although magnesium oxide is less susceptible to hydrolysis) to form the corresponding hydroxides.

In this specification including the accompanying claims percentage analysis figures designated for Ca, MgO, Fe₂0₃ and S are as determined by X ray fluorescence (XRF) spectrometry using a Panalytical XRF AXIOS machine and standard samples to permit quantitative analysis. This procedure is used by Ceram Research Ltd, Stoke on Trent, England, under UKAS Accreditation No. 0013 and in accordance with XRF Test Document No. C201. X ray diffraction (XRD) analysis may be used (if necessary in conjunction with XRF) to determine the compounds present, and the amounts thereof, by virtue of their different crystalline structures. In this specification including the accompanying claims amounts of compounds in the fines from the calcination of dolomite are as determined using a Bruker D8 Advance X ray diffraction spectrometer.

It will be understood that, because of the mixture of compounds in the fines, their physicochemical properties differ substantially from those of calcined dolomite itself.

The loss on ignition (LOI) of the fines at 1000°C is preferably 20 to 30%. The procedure for determining LOI is carried out in accordance with BS EN 1744-1 (1998).

The granulometry of the fines by sieving (sieve aperture in mm: percentage of material passing through the sieve) is preferably: 0.5 mm 100%; 0.3 mm 98 to 100%; 0.25 mm 97 to 100%; 0.125 mm 90 to 100%; and 0.063 mm 65 to 80%. The grading is measured in accordance with the procedure of BS EN 933-1 (1997).

The density of the fines, measured in kerosene in accordance with the procedure of BS EN 10973 (1998) is preferably 0.5 to 0.9 Mg/m³.

The fines material is preferably Doloflour, which is produced at two sites in the UK (Whitwell Quarry and Thrislington Quarry), more preferably Doloflour (Trade name) from the Thrislington quarry (which is also known as Thrislington Doloflour filler aggregate).

The fines material preferably has a pH of 10 to 11 measured in accordance with known procedures. The fines material is preferably angular in shape.

The fines from the calcination of dolomite may be used in association with other finely divided particulate material material, for example cement, microsilica, pulverised fly ash (pfa), limestone fines and/or granulated blast furnace slag. Pulverised fly ash used in the compositions of the invention is preferably conditioned pfa which is wet. Conditioned pfa may be, for example pfa from a power station conditioned with water prior to delivery or lagoon pfa (pfa which has been slurried and pumped to a lagoon; the conditioned pfa is then excavated from the lagoon).

The clay-containing material in the compositions of the invention may be associated with or derived from, for example, basic or acidic aggregates. Such aggregates include crushed rock aggregates from sedimentary rock which is generally hard, dense and cemented (for example limestones and sandstones), metamorphic rock which is generally tough and crystalline (for example quartzite) and igneous rocks (for example granite and basalt). Limestone includes dolomite and dolomitic rocks.

The clay-containing material in the compositions of the invention is preferably associated with or derived from sedimentary rocks, for example limestone. The material may be, for example: wet filter cake from the filtration of the aqueous suspension comprising silt and clay originating from the washing of clay-containing aggregate (for example scalpings); a solid clay-containing material, for example aggregate, e.g. quarry scalpings, contaminated with clay; or a solid clay-containing material, for example an excavated material such as aggregates containing clay, for example trench arisings.

The amount of fines from the calcination of dolomite used in the compositions of the invention depends on a number of factors, *inter alia,* on the clay content of the clay-containing material and the desired effect. The composition preferably comprises from 0.5 to 60% of fines from the calcination of dolomite.

The aqueous suspension may be a suspension comprising silt and clay produced by the washing of clay-containing aggregate, for example by the washing of quarry scalpings. Quarry scalpings may comprise finely divided particulate material which is difficult to separate by screening because of its tendency to adhere to the aggregate. The finely divided particulate material may be removed by washing but the washing process itself produces an aqueous suspension of fine particles from which it can be difficult to remove sufficient water to yield a substantially dry product. Removal of water yields a slurry. Removal of still more water, for example by filtration in a filter press, yields a wet solid which is still difficult to handle. It may be difficult and expensive to reduce the water content to less than 35 to 50%. According to one embodiment of the invention there is provided a composition in which the clay-containing material comprises silt, clay and water. According to a further feature of the invention there is provided such a composition in shaped form, for example a pellet.

The clay-containing material in this embodiment generally comprises from 20 to 50% by weight of water, preferably 30 to 50%, more preferably about 35%.

The clay-containing material is preferably filter cake from the washing of clay-containing aggregate, for example the washing of quarry scalpings, more preferably from the Dowlow quarry in the UK. The filter cake generally comprises, based on the dry weight of its solid components, about 80% limestone as finely divided particulate material and 20% clay.

The filter cake is preferably plastic in accordance with BS 1377-1 (1990). According to a feature of the invention there is provided a process which comprises pelletising a composition comprising fines from the calcination of dolomite and a clay-containing material which material comprises silt, clay and water. The amount of fines from the calcination of dolomite in the composition is generally about 50% based on the dry weight of the clay-containing material.

The pelletisation may be effected by known methods. The composition to be pelletised generally comprises from 20 to 50%, more preferably about 35% of water.

The pellets as initially produced are relatively fragile and should not be subjected to rough or prolonged handling procedures. Preferably the pellets initially produced are stored, generally at ambient temperature and relative humidity, until they have hardened. Storage for about seven days is generally sufficient to allow the pellets to harden sufficiently to be handled by machinery.

The pellets may become warm during their formation. It is believed that during the storage period water is chemically bound in the pellets in a cementitious reaction. The pellets typically comprise about 15 or 16% water after 3 days storage and about 7% after 7 days.

The composition to be pelletised may comprise additional finely divided particulate materials, for example dry fines such as those produced in the quarrying process, preferably dry fines from the Dowlow quarry in the UK. The amount of such additional finely divided particulate material, relative to the fines from the calcination of dolomite, is generally from 50-100%, preferably from 15-50%, more preferably from 20-30%.

The pelletisation is generally effected in a low energy and/or low shear mixer. On a small scale the pelletisation process may be effected in a mixer, for example a standard 25 litre cement mixer. The mixer generally has a diameter less than or equal to 1 metre. A cement mixer can be used which rotates about an axis tilted from the vertical and which has on its internal surface vanes to assist the mixing process. Generally the clay-containing material comprising water, silt and clay is added to the mixer and fines from the calcination of dolomite are gradually added while the mixer rotates at low speed, for example 0.5 to 30 rpm, for example about 25 rpm.

The pellets produced are generally substantially spherical. The pellets are generally from 0.5 to 2.5cm in diameter, preferably 12mm or less in diameter. A range of sizes is generally produced by this method. The size may be controlled, for example, by adjusting the moisture content of composition being pelletised: the lower the moisture content the smaller the pellets.

The process may also be effected by pelletising the composition on a disc pelletiser, for example having a shallow pan.

According to a further embodiment of the invention there is provided a method of facilitating the removal of clay-containing material from a solid which method comprises contacting the solid with fines from the calcination of dolomite to produce a mixture from which the clay can be more readily removed, for example by screening.

The solid may be aggregate contaminated with clay and, optionally, silt. The aggregate may be quarry scalpings, for example limestone scalpings. The amount of clay and silt may be up to 25%, for example 10 to 15%, by weight of the aggregate.

The mixture preferably comprises from 2 to 10% of fines from the calcination of dolomite relative to the weight of aggregate.

The composition comprising fines from the calcination of dolomite and solid clay-containing material is preferably allowed to mellow for a period of time after the fines from the calcination of dolomite have been contacted with the material. The period of time is generally less than about 1 hour, preferably less than about 30 minutes and is most preferably about 10 minutes. The composition is then preferably vigorously mixed before screening.

The fines from the calcination of dolomite and the solid clay-containing material may be blended in the open for example by rotavation. Blending may also be effected in a machine in known manner, for example in a machine suitable for blending aggregate with a particulate material.

When the clay-containing material is dry, for example aggregate with dried on clay, water may be added to facilitate interaction of the clay with the fines from the calcination of dolomite. After mellowing the blended material is preferably mixed and then screened. Screening is preferably carried out on a 6mm screen. The material passing through the screen may be useful in quarry reinstatement. When the material comprises limestone it may be useful as an agricultural field dressing.

The material retained on the screen may be subjected to additional crushing and screening operations.

According to a further embodiment of the invention the clay-containing material may comprise a solid clay-containing material, for example trench arisings or quarry arisings. The solid clay-containing material preferably comprises, for example, up to 50% clay, preferably up to 30% clay, based on dry weight. The composition of the invention then includes a hydraulically bound material.

The amount of fines from the calcination of dolomite used is preferably from 0.5 to 12% by dry weight, more preferably about 4% by dry weight.

Other finely divided particulate materials which may be added include, for example, cement, microsilica, pulverised fly ash (pfa), finely divided particulate limestone and/or granulated blast furnace slag. Preferably, the finely divided particulate material is pulverised fly ash.

The fines from the calcination of dolomite and the solid clay-containing material are preferably vigorously mixed. The mixing may be effected, for example, using a pugmill. When the clay content is high, for example above 30%, or the clay is of very high plasticity, a pre-mixing step may be added in which the mixture is subjected to mixing with high shear in order to reduce the possibility of blocking of the pugmill.

In a preferred embodiment the fines from the calcination of dolomite and the clay-containing material are contacted with each other, for example by blending, and then allowed to mellow (i.e. rest) for a period of time, for example, from 2 to 24 hours before the mixing step.

Other finely divided particulate material materials are generally added at the mixing stage, for example to the pug mill.

The water content of the mixture may, if necessary, be adjusted before, during or after mixing, preferably before mixing.

In a further preferred embodiment arisings, for example trench arisings, are contacted with conditioned pfa; the materials are preferably mixed to produce a homogeneous mixture, for example in a high shear mixer such as a pugmill; the mixture is then contacted with Doloflour and again mixed for example in a high shear mixer such as a pugmill.

The invention is further illustrated in the accompanying drawings.

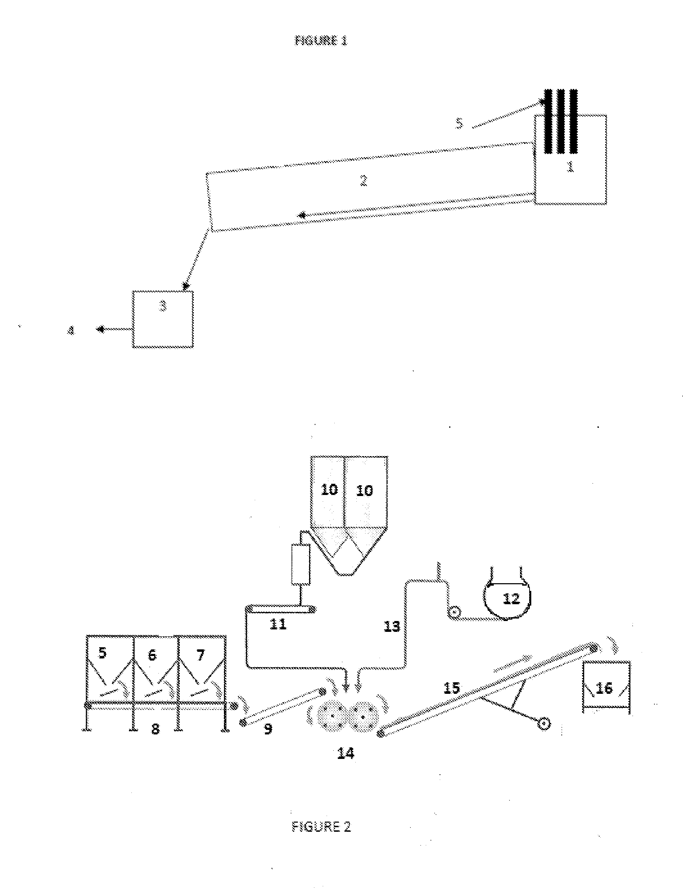

A typical kiln for the calcination of dolomite (and which generates fines which are collected) is shown in Figure 1 in which: dolomite is introduced into a preheater (1) and then passes into a rotating cylindrical calcining kiln (2); the dolomite moves through the kiln in the direction of the arrow. Calcined material exits the kiln and passes to an air cooler (3) where the calcined dolomite is cooled and collected (4). The temperature at the point of entry into the kiln (2) is about 900°C; the temperature at the other end of the kiln where calcined material exits the kiln (2) is about 1800°C. The kiln is heated by the combustion of pulverised coal in air; a stream of hot air enters the kiln at the end remote from the preheater (1) and passes towards the preheater. Dust generated during calcination in the rotating kiln (2) is entrained by the hot air stream and is precipitated on electrodes (4). The fines material is removed from the electrodes and collected.

Figure 2 illustrates a plant for the production of HBM in which hoppers (5), (6) and (7) contain trench arisings, conditioned pfa and any other aggregate feedstock. The hoppers are supplied with material from stockpiles (not shown). Predetermined quantities of material from the hoppers (5), (6) and (7) are fed to a conveyer (8). The conveyer (8) delivers material to a second conveyer (9). Doloflour is delivered from hoppers (10) to a conveyer (11). Water is supplied from a tank (12) via a line (13). The conveyers (9) and (11) and the line (13) deliver material to a continuous pugmill mixer (14) which vigorously mixes the materials supplied to it. The pugmill delivers the mixed material to a conveyer (15) which carries the material to a gob hopper (16). The gob hopper allows material to be discharged into lorries without stopping production. The plant may be located at a central depot or may be carried on a self-propelled vehicle for use at a site which produces trench arisings.

In a preferred embodiment material from the hoppers (5), (6) and (7), for example conditioned pfa and trench arisings, is first fed to the pugmill (14) to produce a pre-blended material which is then recycled and fed in predetermined quantity to the conveyor (9) optionally via a hopper (not shown). In the production of HBM a predetermined amount of Doloflour and any other dry addition is delivered from the hoppers (10). A predetermined amount of water is pumped from tank (12) via line (13). Residence time in the mixer (14) is adjusted to provide a homogeneous mix. The residence time is generally from 5 to 60 seconds.

In this specification, including the accompanying claims, it is to be understood that unless otherwise specified:
the term "limestone" embraces dolomite;
the term "dolomite" embraces dolomite and dolomitic rocks;
the term "silt" embraces a material having particle sizes generally from 8µm to 0.063mm; percentages are by weight.

Particle size distribution (between 0.02 µm and 2 mm) may be measured using a Malvern MS2000 laser granulometer. Measurement is effected in ethanol. The light source consists of a red He-Ne laser (632 nm) and a blue diode (466 nm). The optical model is that of Mie and the calculation matrix is of the polydisperse type.

The apparatus is checked before each working session by means of a standard sample (Sifraco C10 silica) for which the particle size distribution is known.

Measurements are performed with the following parameters: pump speed 2300rpm and stirrer speed 800rpm. The sample is introduced in order to establish an obscuration between 10 and 20%. Measurement is effected after stabilisation of the obscuration. Ultrasound at 80% is first applied for 1 minute to ensure the de-agglomeration of the sample. After about 30s (for possible air bubbles to clear), a measurement is carried out for 15s (15000 analysed images). Without emptying the cell, measurement is repeated at least twice to verify the stability of the result and elimination of possible bubbles.

All values given in the description and the specified ranges correspond to average values obtained with ultrasound.

The following non-limiting Examples illustrate the invention.

### EXAMPLES

Materials used:
Dowlow filter cake (from the washing plant at Dowlow quarry)
Doloflour (from the Thrislington quarry)
Dowlow fines (finely divided particulate Carboniferous limestone containing more than 99% CaCO₃; 0/4mm)

### EXAMPLE 1

The filter cake was well mixed before use to avoid water separation. The filter cake was then mixed in a 25 litre Readymix Tumble Mixer with Doloflour and, in some cases, with Dowlow fines (finely divided particulate material). The amounts of materials used and the order of mixing were varied. The mixing procedure and the behaviour of the mixture are recorded in Table 1 below.

**Table 1**

| **Sample Number** | **Dowlow filter cake (kg)** | **Doloflour (kg)** | **Dowlow 0/4mm dry fines (kg)** | **Method** | **Observations** |
|---|---|---|---|---|---|
| 1 | 5 | 3 | - | Dowlow filter cake in the mixer followed by slow addition of Doloflour. Some fine water spray applied. | Balls formed after addition of 1.65 kg of Doloflour. Good size achieved and material very dry after full addition. Material got very warm and held shape during transfer. Some sticking behind blades. |
| 2 | 5 | 1.5 | - | Dowlow filter cake in the mixer followed by slow addition of Doloflour. Some fine water spray applied. | Still wet and sticky. Some balls formed but mostly lumpy. |
| 3 | 5 | 1.5 | 5 | Dowlow filter cake in the mixer followed by slow addition of dry fines. Doloflour added at point of ball formation | Dry balls formed. |
| 4 | 5 | 2.5 | 2.5 | Dowlow filter cake in the mixer followed by slow addition of dry fines followed by Doloflour. | Nice small balls formed after addition of Doloflour. |
| 5 | 5 | 2.5 | 2.5 | Fines and Doloflour in the mixer. Dowlow filter cake added slowly. | Powder sticks to sides of mixer and behind blades. Small dry balls formed. Quite dusty during mixing. |
| 6 | 5 | 2.5 | 2.5 | Dowlow filter cake in the mixer followed by Doloflour then dry fines (slow). | Balls slightly bigger but look ok. |
| 7 | 5 | 2.5 | 2.5 | Dowlow filter cake in the mixer followed by slow addition of a pre-blend of Doloflour and dry fines. | Good dry balls. Pre-blending Doloflour and dry fines avoids build up of fine material behind blades. Appears very effective. |
| 8 | 5 | 2.5 | 1 | Dowlow filter cake in the mixer followed by slow addition of a pre-blend of Doloflour and dry fines. | Good dry balls. Pre-blending Doloflour and dry fines avoids build up of fine material behind blades. Appears very effective. |
| 9 | 5 | 2.5 | 2.5 | Dowlow filter cake in the mixer followed by addition of 4 mm dry fines then Doloflour. | Formed mostly small balls following Doloflour addition. |

### EXAMPLE 2

1kg of Doloflour (from Thrislington quarry, UK) was mixed with 10 kg of scalpings from the Thrislington quarry. The scalpings contained aggregate and fines (finely divided particulate material, the fines being capable of passing through a 63µm sieve). The scalpings had an initial water content of about 15%. The Doloflour dried the scalpings and the fines no longer adhered to the aggregate. The angular shape of the aggregate was revealed. The moisture content of the treated scalpings was 3.8%: the treated scalpings contained 10% of finely divided particulate material (passing through a 63µm sieve).
30 minutes after mixing the mixture of scalpings and Doloflour was successfully sieved on a 6mm sieve and finely divided particulate material were removed from the aggregate.
24 hours after mixing the mixture of scalpings and Doloflour was successfully sieved on a 6mm sieve and finely divided particulate material was removed to yield dry aggregate retained on the sieve.

The experiment was repeated using a 10mm sieve 24 hours after mixing. The aggregate retained on the sieve was crushed using a laboratory Sturtevant Jaw Crusher set at its maximum opening (25mm). The crushed product was screened to yield a 4/20mm aggregate suitable for use as concrete aggregate.

### EXAMPLE 3

Utility trench arisings containing 15% of clay were treated with pulverised fly ash (pfa) and Doloflour in the following proportions by weight:

| | |
|---|---|
| Utility trench arisings | :89 |
| Pfa | :8 |
| Doloflour | :3 |

The pfa was added to the utility trench arisings in a Readymix Tumble mixer and mixed for 5 minutes. The Doloflour was then gradually added (during about 1 minute) and mixing then continued for a further 5 minutes. A sample of the mixture was removed from the mixer and compacted in 150mm cubic concrete moulds. The mixture in the moulds was cured for 28 days at ambient temperature and then tested for Compressive Strength in accordance with BS EN 12390-3:2009 strengths of 2 to 4 N/mm² were obtained.

## Claims

1. A composition comprising a clay-containing material and fines which fines are from the calcination of dolomite.

2. A composition according to claim 1 which comprises 0.5 to 60% of fines from the calcination of dolomite.

3. A composition according to claim 1 or 2 in which the clay-containing material is an aqueous suspension from the washing of clay-containing aggregate.

4. A composition according to claim 3 in which the aqueous suspension comprises from 30 to 50% of water.

5. A composition according to claim 4 in shaped form.

6. A composition according to claim 5 in which the shaped form is a pellet.

7. A process for the preparation of a pellet which comprises pelletising a composition according to claim 3.

8. A process according to claim 7 which further comprises storing the pellet at ambient temperature after its production.

9. A process for facilitating the removal of clay from a solid which method comprises contacting the solid with fines from the calcination of dolomite to produce a mixture.

10. A process according to claim 9 which further comprises allowing the mixture to mellow before further treatment.

11. A process according to claim 9 or 10 in which the solid is aggregate contaminated with clay and, optionally, silt.

12. A process according to claim 11 in which the aggregate comprises 10 to 15% of clay and silt.

13. A process according to any one of claims 9 to 12 in which the solid is contacted with 2 to 10 % of fines from the calcination of dolomite.

14. A process according to any one of claims 9 to 13 in which the mixture is screened to separate the clay-containing material.

15. A process for the production of a hydraulically bound material which process comprises contacting fines from the calcination of dolomite and a solid clay-containing material.

16. A process according to claim 15 in which the solid clay-containing material comprises trench arisings.

17. A process according to claim 15 or 16 in which from 0.5 to 12% by weight of fines from the calcination of dolomite are used relative to the solid material.
